# EUROPÄISCHE PATENTSCHRIFT

(11) **EP 0 553 878 B1**
(45) Veröffentlichungstag und Bekanntmachung des Hinweises auf die Patenterteilung: **21.05.1997**
(21) Anmeldenummer: 93101452.6
(22) Anmeldetag: 29.01.1993
(51) Int. Cl.: F27D 15/02, F27B 7/38, C04B 7/47, F23H 3/02

(54) **Schubrostkühler**
Grate cooler
Refroidisseur à grille

(30) Priorität: 16.12.1992 DE 4242374; 31.01.1992 DE 4202777
(43) Veröffentlichungstag der Anmeldung: 04.08.1993
(73) Patentinhaber: DEUTZ Aktiengesellschaft, 51063 Köln (DE)
(72) Erfinder: Stahl, Hans, Dipl.-Ing., W-5000 Köln 91 (DE); Dittmann, Günter, Dipl.-Ing., W-4500 Dessau (DE); Döge, Reimar, W-3400 Zerbst (DE)

(56) Entgegenhaltungen:
- DE-A- 3 343 024
- DE-C- 926 982
- FR-A- 624 953
- US-A- 2 055 940
- US-A- 4 563 959
- Z.K.G Bd. 43, Nr. 9, 1. September 1990, WIEBADEN Seiten 440 - 444 , XP000173505 G.KOEBERER 'einsatz von muldenrostplatten in klinkerk hlern'

## Beschreibung

Die Erfindung betrifft einen Schubrostkühler zum Abkühlen von heißem Gut, z. B. von aus einem Drehrohrofen austretenden Zementklinker, mit quer zur Förderrichtung des Rostes angeordneten Rostplattenträgern, die als von Kühlluft durchströmte Hohlbalken ausgebildet sind, wobei die in der Förderrichtung aufeinander folgenden Rostplattenträger abwechselnd ortsfest und in der Förderrichtung des Rostes hin- und herbeweglich ausgebildet und die beweglichen Rostplattenträger auf wenigstens einem längsbeweglich gelagerten Schubrahmen befestigt sind.

Bei einem Schubrostkühler besteht das Rostsystem aus einer Vielzahl von ortsfesten und beweglichen Rostplattenträgern, auf denen jeweils mehrere mit Kühlluftöffnungen versehene und im wesentlichen von unten nach oben von Kühlluft durchströmte Rostplatten befestigt sind. In Förderrichtung gesehen wechseln sich ortsfeste Rostplattenreihen, die über ihre ortsfesten Rostplattenträger am Gehäuseunterteil bzw. an den Kühlergehäuseseitenwänden befestigt sind, mit hin- und herbeweglichen Rostplattenreihen ab, die über ihre entsprechend hin- und herbeweglichen Rostplattenträger auf einem oder mehreren längsbeweglich gelagerten Schubrahmen gemeinsam befestigt sind. Der Antrieb der Schubrahmen erfolgt über 20 außerhalb des Gehäuseunterteils installierte Antriebe, in der Regel Schubkurbelantriebe oder auch Hydraulikzylinder. Durch die gemeinsame oszillierende Bewegung aller beweglichen Rostplattenreihen wird das zu kühlende Gut schubweise transportiert und dabei gekühlt (Sonderdruck S 7-321 d "Kühlung von körnigem Schüttgut, z. B. Zementklinker, Erzen, Sinterpellets etc." der KHD Humboldt Wedag AG).

Sind die Rostplattenträger als quer zur Kühlerlängsachse angeordnete Hohlbalken ausgebildet, durch welche hindurch die Kühlluft zu den einzelnen Rostplatten herangeführt wird, so macht es Schwierigkeiten, die Kühlluft in die hin- und herbeweglichen Rostplattenträger einströmen zu lassen. Bisher hat man dazu von stationär unterhalb der Schubroste verlegten Kühlluftleitungen her die hin- und herbeweglichen und einzeln mit Kühlluft belüfteten Rostplattenträger mit flexiblen Schlauchleitungen verbunden. Die Schubbewegung der Rostplattenträger verursacht eine ständige Pendelbewegung der flexiblen Luftschlauchleitungen, die durch die häufigen Biege-Wechsel-Beanspruchungen und den gleichzeitig abrasiven Verschleiß durch den anhaftenden feinen Kühlluftstaub vorzeitig brechen und dadurch Stillstände des Klinkerkühlers sowie einer ganzen Zementklinker-Produktionslinie verursachen können.

Aus der GB-A-961 719 ist nicht ein Schubrostkühler zum Abkühlen von heißem Gut wie z. B. von aus einem Drehrohrofen austretenden glühend heißen Zementklinker bekannt, sondern ein Feuerungsrost für einen Ofen zur Verbrennung von Kohle, wobei der Feuerungsrost aus beweglichen Rostplatten und festen Rostplatten zusammengesetzt ist. Die beweglichen Rostplatten sind auf einem auf Rädern hin- und herbeweglichen Rostplattenträger angeordnet, mit einem Rahmen, der im Querschnitt ein U-Profil aufweist. Unterhalb des auf Rädern hin- und herbeweglichen Rostplattenträgers ist ein mitbewegtes Hauptluftzuführungsrohr befestigt, welches parallel zur Längsachse des Feuerungsrostes angeordnet ist. Von dem beweglichen Hauptluftzuführungsrohr erstrecken sich zahlreiche mitbewegliche Sekundärluftrohre eines bauaufwendigen Luftverteilerkanalsystems nach oben zur Versorgung der beweglichen Rostplatten mit Verbrennungsluft. Dazu ist das parallel zur Längsachse des Feuerungsrostes bewegliche Hauptluftzuführungsrohr mit einem Gebläse über eine Gleitdichtungsverbindung verbunden.

Der Erfindung liegt die Aufgabe zugrunde, einen einfach gebauten betriebssicher arbeitenden Schubrostkühler zu schaffen, dessen System zur Zuführung der Kühlluft zu den mit dem Schubrahmen hin- und herbeweglichen Rostplattenträgern und darauf befestigten hin- und herbeweglichen Rostplatten vereinfacht ist und ohne flexible Kühlluft-Schlauchleitungen auskommt.

Diese Aufgabe wird erfindungsgemäß mit den Maßnahmen des Kennzeichnungsteils des Patentanspruchs gelöst.

Beim erfindungsgemäßen Schubrostkühler ist wenigstens ein Teil des Schubrahmens als Hohlkörper und als Kühlluftkanal ausgebildet, der mit den hin- und herbeweglichen Rostplattenreihen kühlluftseitig verbunden ist. Die Kühlluft wird also durch die als Hohlkörper ausgebildeten Rahmen-Längsholme bzw. Querholme des Schubrahmens in die darauf befestigten mit dem Schubrahmen hin- und herbeweglichen ebenfalls als Hohlkörper ausgebildeten Rostplattenträger und von diesen in die darauf wiederum befestigten hin- und herbeweglichen Rostplatten eingeführt. Beim erfindungsgemäßen Schubrostkühler wird der wenigstens eine längsbeweglich gelagerte Schubrahmen in zweifacher Weise genutzt, nämlich einmal zum Tragen der hin- und herbeweglichen Rostplattenträger samt darauf befestigter Rostplatten und zum anderen als Rohrleitungssystem zur Versorgung der reihenbelüfteten hin- und herbeweglichen Rostplatten mit Kühlluft. Auf diese erfindungsgemäße Weise ist das Problem der Heranführung bzw. Einführung der Kühlluft an die bzw. in die in ganzen Reihen belüfteten hin- und herbeweglichen Rostplatten auf einfache Weise gelöst.

Die Erfindung und deren weitere Merkmale und Vorteile werden anhand der in den Figuren schematisch dargestellten Ausführungsbeispiele näher erläutert.

Es zeigt
- Fig. 1:: einen Vertikallängsschnitt durch eine erste Ausführungsform des erfindungsgemäßen Schubrostkühlers längs der Linie A-A der Fig. 2;
- Fig. 2:: eine Draufsicht, teils im Schnitt, auf den erfindungsgemäßen Schubrostkühler in Richtung des Pfeiles B der Fig. 1;
- Fig. 3:: als Teilausschnitt eine Seitenansicht in Richtung des Pfeiles C der Fig. 2.;
- Fig. 4:: im Vertikallängsschnitt eine zweite Ausführungsform des erfindungsgemäßen Schubrostkühlers;
- Fig. 5:: den Schubrostkühler im Querschnitt längs der Linie D-D der Fig. 4;
- Fig. 6:: den Schubrostkühler im Schnitt längs der Linie E-E der Fig. 4.

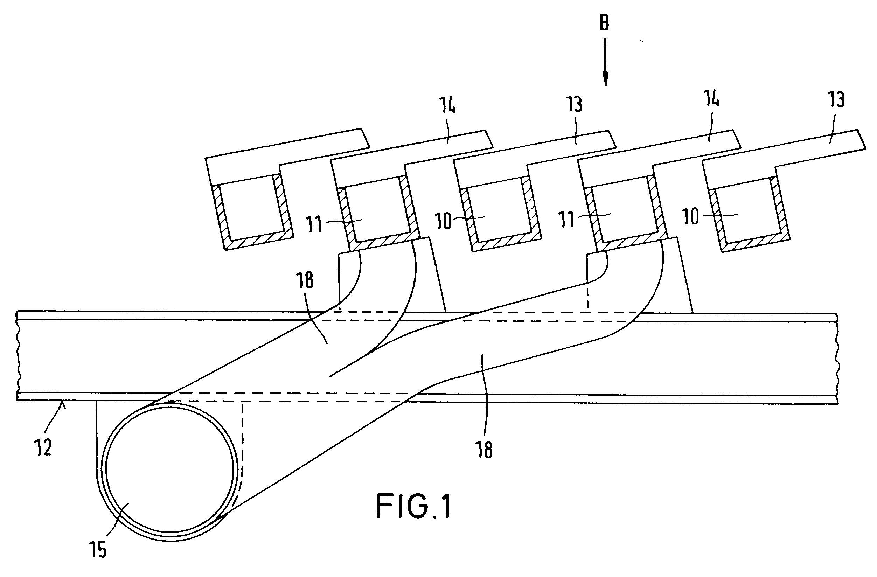

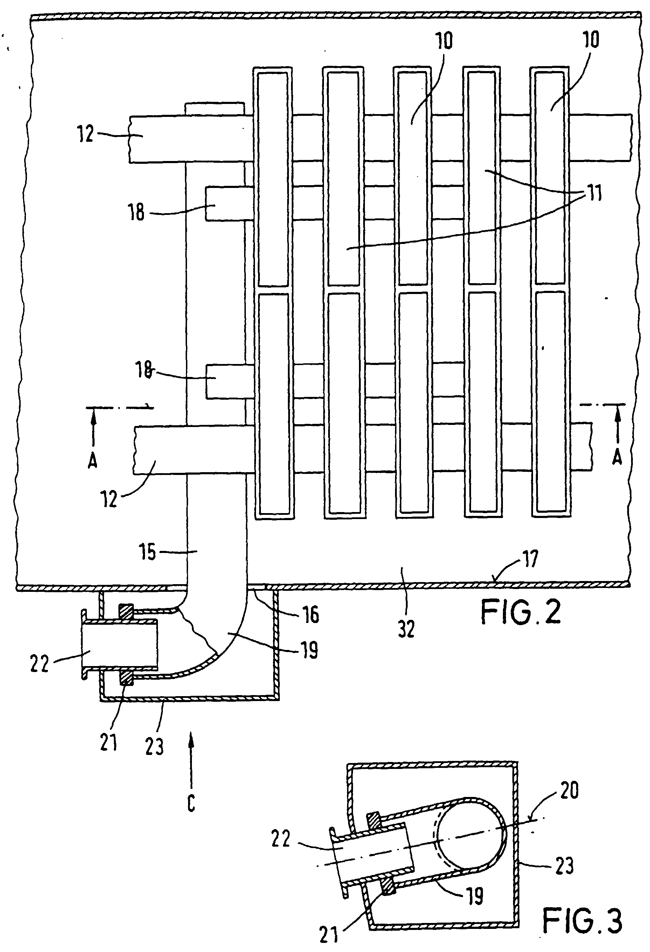

Wie aus den Fig. 1 und 2 hervorgeht, wechseln sich beim erfindungsgemäßen Schubrostkühler ortsfest bleibende Rostplattenträger (10) mit hin- und herbeweglichen Rostplattenträgern (11) ab, wobei letztere auf einem oder mehreren längsbeweglich gelagerten Schubrahmen (12) gemeinsam befestigt sind. Die Rostplattenträger (10 und 11) sind als Hohlbalken ausgebildet und werden von Kühlluft durchströmt. Auf den festen Rostplattenträgern (10) sind die ortsfest bleibenden Rostplatten (13) und auf den beweglichen Rostplattenträgern (11) sind die entsprechend hin- und herbeweglichen Rostplatten (14) befestigt, wie aus Fig. 1 hervorgeht. Die Rostplattenreihen (13 und 14) sind in der Draufsicht der Fig. 2 weggelassen.

Durch die gemeinsame oszillierende Bewegung aller beweglichen Rostplattenreihen (14) wird das in Fig. 1 nicht dargestellte zu kühlende Gut auf dem Schubrost schubweise von links nach rechts transportiert und dabei gekühlt.

Wenigstens ein Teil des Schubrahmens (12) ist als Hohlkörper und als Kühlluftkanal ausgebildet, der mit den hin- und herbeweglichen Rostplattenreihen (11, 14) kühlluftseitig verbunden ist und durch den die Kühlluft über die beweglichen Rostplattenträger (11) zu den darauf befestigten entsprechend hin- und herbeweglichen Rostplatten (14) geführt wird. Die Versorgung des als Hohlkörper ausgebildeten Schubrahmens (12) mit Kühlluft kann nach den Fig. 1 und 2 über einen an der Unterseite des Schubrahmens quer zur Kühlerlängsachse angeordneten und sich mit dem Schubrahmen mitbewegenden Kühlluftkanal (15) erfolgen, der durch eine Öffnung (16), die z. B. die Gestalt eines Langlochs haben kann, durch die im Schnitt gezeichnete Kühlerseitenwand (17) nach außen hindurchgeführt ist (Fig. 2). Das durch die Kühlerseitenwand (17) herausgeführte Ende des Kühlluftkanals (15) endet mit einem 90°-Krümmer (19), dessen Achse (20) [siehe Fig. 3] parallel zur Hin- und Her-Bewegungsrichtung des Schubrahmens (12) liegt und dessen Ende über eine Ringdichtung (21) mit einem ortsfesten Kühlluftzuführungsstutzen (22) verbunden ist, wodurch der Übergang vom hin- und herbeweglichen Krümmer (19) zum ortsfesten Kühlluftzuführungsstutzen (22) zuverlässig und betriebssicher abgedichtet ist. Der 90°-Krümmer (19) am Ende des Kühlluftkanals (15) sowie der ortsfeste Kühlluftzuführungsstutzen (22) sind in einem die Öffnung (16) der Kühlerseitenwand (17) abdeckenden Kasten (23) eingeschlossen, in dem der Druck der Luftkammer (32) des Kühlergehäuses herrscht. Der Kasten (23) kann auch innerhalb des Kühlergehäuses angeordnet sein.

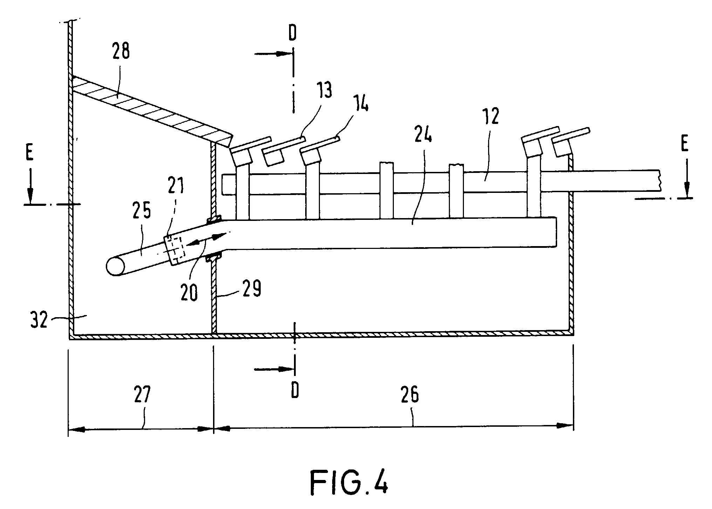

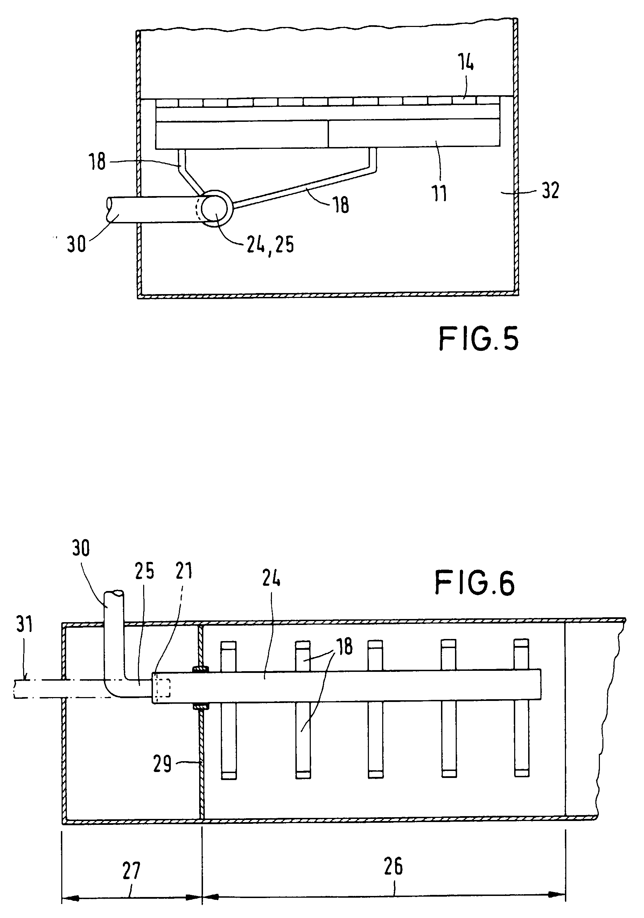

Bei größeren Rostflächen, bei denen pro Schubrahmen (12) eine Vielzahl beweglicher Rostplattenreihen (14) belüftet werden muß, kann eine Luftzuführungseinrichtung in der zur Fig. 2 beschriebenen Art nicht mehr ausreichen. In solchen Fällen kann, wie die Fig. 4 bis 6 zeigen, die Luftzuführung zum als Hohlkörper und Kühlluftkanal ausgebildeten Schubrahmen (12) durch einen in Längsrichtung des Rostkühlers angeordneten Kühlluftkanal (24) vorgenommen werden. Dieser Kühlluftkanal (24) ist ebenfalls an der Unterseite des Schubrahmens (12) befestigt und bewegt sich mit diesem mit. Der Übergang vom hin- und herbeweglichen Kühlluftkanal (24) zum ortsfesten Kühlluftzuführungsstutzen (25) ist mit einer Ringdichtung (21) abgedichtet, und die Achse (20) des Lufteintrittsendes des mitbewegten Kühlluftkanals (24) liegt wiederum parallel zur Hin- und Her-Bewegungsrichtung des Schubrahmens (12). Der Übergang vom Lufteintrittsende des Kühlluftkanals (24) zum ortsfesten Kühlluftzuführungsstutzen (25) ist dabei zweckmäßigerweise nicht im staubbelasteten Bereich (26) unterhalb des beweglichen Schubrostes mit den ortsfesten Rostplattenreihen (13) und den beweglichen Rostplattenreihen (14) angeordnet, sondern in einem benachbarten Bereich (27), der unterhalb eines separat belüfteten feststehenden Rostes (28) liegt, wobei die Bereich (26, 27) mit einer Wand (29) voneinander getrennt sind. Die Kühlluftzuführung zum Kühlluftkanal (24) erfolgt durch außerhalb des Kühlerbereiches (27) angeschlossene ortsfeste Zuleitungen (30 bzw. 31).

Zur zusätzlichen Kühlluftversorgung der beweglichen Rostplattenträger (11) sowie der darauf befestigten mitbeweglichen Rostplatten (14) können von dem an der Unterseite des Schubrahmens (12) angeordneten Kühlluftkanal (15 bzw. 24) mehrere mitbewegte starre Verbindungskanäle (18) zu den beweglichen Rostplattenträgern (11) des Schubrostes abzweigen.

## Patentansprüche

1. Schubrostkühler zum Abkühlen von heißem Gut, z. B. von aus einem Drehrohrofen austretenden Zementklinker, mit quer zur Förderrichtung des Rostes angeordneten Rostplattenträgern (10, 11), die als von Kühlluft durchströmte Hohlbalken ausgebildet sind, wobei die in der Förderrichtung aufeinander folgenden Rostplattenträger (10, 11) abwechselnd ortsfest (10) und in der Förderrichtung hin- und herbeweglich (11) ausgebildet und die beweglichen Rostplattenträger (11) auf wenigstens einem längsbeweglich gelagerten Schubrahmen (12) befestigt sind, dadurch gekennzeichnet, daß wenigstens ein Teil des Schubrahmens (12) als Hohlkörper und als Kühlluftkanal ausgebildet ist, der mit den Reihen hind- und herbeweglicher Rostplatten (14) kühlluftseitig verbunden ist und durch den die Kühlluft über die beweglichen Rostplattenträger (11) zu den darauf befestigten entsprechend hin- und herbeweglichen Rostplatten (14) geführt wird.

2. Schubrostkühler nach Anspruch 1, dadurch gekennzeichnet, daß an der Unterseite des Schubrahmens (12) wenigstens ein sich mit diesem mitbewegender Kühlluftkanal (15 bzw. 24) quer bzw. parallel zur Kühlerlängsachse angeordnet ist, von dem zusätzliche starre Verbindungskanäle (18) zu den beweglichen Rostplattenträgern (11) zur zusätzlichen Kühlluftversorgung der darauf befestigten mitbeweglichen Rostplatten (14) abzweigen.

## Claims

1. A thrust grate cooler for the cooling of hot material, e.g. of cement clinker emerging from a revolving cylindrical furnace, with grate plate carriers (10,11) arranged transversely to the conveying direction of the grate, which are constructed as hollow bars having cooling air flowing through them, in which the grate plate carriers (10,11), following each other in the conveying direction, are constructed so as to be alternately fixed (10) and movable back and forth (11) in the conveying direction, and the movable grate plate carriers (11) are secured on at least one thrust frame (12) which is mounted so as to be movable longitudinally, characterised in that at least one part of the thrust frame (12) is constructed as a hollow body and as a cooling air duct, which is connected on the cooling air side with the rows of grate plates (14) which are movable back and forth, and through which the cooling air is guided via the movable grate plate carriers (11) to the grate plates (14), secured thereon, which are movable back and forth accordingly.

2. A thrust grate cooler according to Claim 1, characterised in that on the underside of the thrust frame (12) at least one cooling air duct (15 or 24), moving together therewith, is arranged transversely or parallel to the longitudinal axis of the cooler, from which additional rigid connecting ducts (18) branch off to the movable grate plate carriers (11) for the additional supply of cooling air of the grate plates (14), also moving and fastened thereon.

## Revendications

1. Refroidisseur à grille mobile de poussée servant à refroidir des produits chauds, par exemple du clinker de ciment sortant d'un four rotatif, dans lequel :
des supports (10, 11) de plaque de grille sont disposés transversalement par rapport à la direction d'avancement de la grille et constitués par des barres creuses traversées par de l'air froid, avec alternance de supports fixes (10) et de supports (11) mobiles en va et vient dans la direction d'avancement de la grille, ces derniers étant fixés sur au moins un cadre (12) coulissant selon la direction longitudinale,
caractérisé en ce qu'
au moins une partie du cadre coulissant (12) est constituée par un corps creux jouant le rôle de canal d'air froid relié au rangées de plaques de grille mobiles en va et vient du côté où arrive l'air froid, et amenant ainsi cet air à travers les supports mobiles (11), aux plaques de grille fixées sur ces supports et mobiles en va et vient avec eux.

2. Refroidisseur à grille mobile selon la revendication 1, caractérisé en ce que
sur la face inférieure du cadre coulissant (12) est monté au moins un canal d'air froid (15 ou 24) se déplaçant avec ce cadre et disposé transversalement c'est-à-dire selon la direction de l'axe longitudinal du refroidisseur, canal d'où partent en dérivation des canaux rigides supplémentaires (18) aboutissant aux supports mobiles (11) des plaques de grille, afin d'assurer une alimentation supplémentaire en air froid des plaques de grille (14) fixées aux supports mobiles (11).
